# FASCICULE DE BREVET EUROPEEN

(11) **EP 3 728 084 B1**
(45) Date de publication et mention de la délivrance du brevet: **07.07.2021**
(21) Numéro de dépôt: 18833918.8
(22) Date de dépôt: 11.12.2018
(51) Int. Cl.: B65G 43/08, B65G 43/10, B65G 1/137, G05B 19/418, G06Q 10/08

(54) **PROCEDE DE PALETTISATION D'OBJETS HETEROGENES**
VERFAHREN ZUM PALETTIEREN VON HETEROGENEN GEGENSTÄNDEN
METHOD FOR PALLETISING HETEROGENEOUS OBJECTS

(30) Priorité: 21.12.2017 FR 1762695
(43) Date de publication de la demande: 28.10.2020
(73) Titulaire: Solystic, 92220 Bagneux (FR)
(72) Inventeur: CHIROL, Luc, 75016 Paris (FR)
(74) Mandataire: Prugneau, Philippe
(86) Numéro de dépôt international: PCT/FR2018/053208
(87) Numéro de publication internationale: WO 2019/122598

(56) Documents cités:
- WO-A1-2016/059314
- FR-A1- 3 039 780
- US-A- 5 501 571
- US-A1- 2008 167 884

## Description

### Domaine technique

L'invention se situe dans le domaine de la logistique, et plus précisément dans le domaine de la palettisation d'objets en plate-forme logistique, ces objets étant en particulier des colis en cours d'acheminement.

### Technique antérieure

A des fins de manutention, des objets à transporter sont souvent rangés sur des palettes au sein d'une plate-forme logistique de tri et de palettisation.

La palettisation, c'est-à-dire le rangement des objets sur les palettes, est une opération encore largement manuelle impactant négativement la productivité et la flexibilité des opérations et qui représente un travail pénible pour les opérateurs humains.

Plus précisément, les opérateurs rangent à la main les objets en lots sur les palettes au fur et à mesure de leur arrivée, ce qui nécessite d'une part un apprentissage des règles de constitution des lots et d'autre part de reprendre le rangement des lots sur les palettes en fonction des derniers objets arrivés.

Ces opérations sont d'autant plus complexes que les objets sont des objets hétérogènes ayant des formes et des poids différents d'un objet à l'autre, et qui sont inconnus à l'arrivée des objets au centre de tri et de palettisation.

Afin de répondre à certaines de ces difficultés, le brevet US 5,501,571 décrit une solution d'automatisation de la palettisation dans laquelle les objets à palettiser sont transportés en succession sur un convoyeur, et identifiés et caractérisés en dimensions et en poids au cours de leur passage sur le convoyeur, de sorte à améliorer leur rangement sur une palette située au bout du convoyeur grâce à un système déterminant une configuration optimisant le chargement de la palette pour les derniers objets arrivés et rangeant chaque objet en fonction de ses dimensions et de son poids.

La demande de brevet US2008/167884 A1 divulgue un procédé de préparation de commandes d'articles, selon le préambule de la revendication 1, mettant en œuvre des dispositifs de stockage mobiles d'articles et des unités mobiles de déplacement de ces dispositifs, et incluant éventuellement une palettisation optimisée des articles selon des règles tenant compte de leurs poids ou de leurs tailles.

### Exposé de l'invention

Le système d'automatisation décrit dans le brevet US 5,501,571 repose sur une infrastructure fixe peu polyvalente et peu adaptable où à un point d'alimentation ne correspond qu'une station de palettisation, et ne permet pas un haut niveau d'optimisation du rangement sur les palettes.

Un objet de l'invention est de fournir un procédé permettant un rangement optimal des objets sur une ou plusieurs palettes.

Un autre objet de l'invention est un procédé polyvalent de manutention d'objets de formes, de tailles et de poids inconnus en vue de leur palettisation ne nécessitant qu'une infrastructure et une surface au sol réduites tout en permettant des opérations de constitution de palettes en parallèles.

A ces effets, l'invention a pour objet un procédé pour palettiser des objets en lots sur palettes, comprenant une étape d'acquisition de données d'identification et de morphologie des objets à palettiser pour optimiser le rangement des objets sur une palette, caractérisé en ce que des chariots portant les objets à palettiser sont déplacés par des robots-navettes d'un point d'alimentation en objets, où les objets sont chargés sur les chariots à raison d'un objet par chariot, à une zone de stockage tampon puis à des stations de palettisation, sous contrôle d'une unité de contrôle/commande ; à la suite du chargement des objets sur les chariots au point d'alimentation, l'étape d'acquisition des données d'identification et de morphologie des objets est réalisée au moyen de dispositifs d'identification et de dispositifs de détermination des morphologies des objets, puis les chariots portant les objets sont déposés dans la zone de stockage tampon par les robots-navettes ; à partir des données d'identification et de morphologie des objets, l'unité de contrôle/commande détermine qu'un lot complet d'objets à palettiser peut être constitué sur une palette et, lorsque l'unité de contrôle/commande détermine que tous les objets constituant le lot complet ont été présentés aux dispositifs d'identification et de détermination des morphologies, l'unité de contrôle/commande calcule un plan de chargement de ces objets sur la palette, le plan étant indicatif d'une séquence temporelle selon laquelle ces objets doivent être rangés sur la palette pour obtenir une répartition spatiale optimale des objets sur la palette tenant compte des morphologies de chacun des objets constituant ledit lot complet ; et en réponse à la détermination et du calcul du plan de chargement, l'unité de contrôle/commande initie le chargement du lot complet en pilotant les robots-navettes de manière à récupérer les chariots portant les objets constituant le lot complet dans la zone de stockage tampon de manière à présenter les chariots en séquence à une station de palettisation dans l'ordre de la séquence temporelle des objets.

Selon ce procédé, des objets à palettiser de formes inconnues arrivant à un point d'alimentation peuvent être identifiés et caractérisés pour en déterminer les morphologies puis stockés temporairement dans un stock tampon jusqu'à ce que tous les objets d'un lot aient été caractérisés, de sorte qu'un plan optimum de chargement d'une palette tenant compte des morphologies de chacun des objets constituant ledit lot peut être calculé.

De plus, des lots d'objets de formes variées à palettiser peuvent être constitués, un lot incomplet ne bloque pas les flux dans le système puisque les objets le composant sont temporairement stockés et des palettes peuvent être chargées en parallèle à partir d'un seul point d'alimentation, ce qui autorise une grande polyvalence opérationnelle.

L'invention peut avantageusement présenter les particularités suivantes :
- on peut utiliser des chariots gigognes pour manutentionner les objets ;
- les chariots peuvent être stockés dans la zone de stockage tampon de part et d'autre d'allées de circulation des robots-navettes au bout desquelles sont situées les stations de palettisation ;
- les objets d'un même lot peuvent être stockés sur chariot à raison d'un objet par chariot le long d'une même allée de circulation des robots-navettes
- deux stations de palettisation peuvent être alimentées en parallèle en objets à palettiser provenant dudit point d'alimentation.

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1A illustre un exemple d'un système de manutention et de palettisation d'objets hétérogènes capable de mettre en œuvre le procédé selon l'invention ;
- la figure 1B illustre l'arrivée d'objets à un point d'alimentation du système de la figure 1A, ainsi que la manutention de l'objet dans le système ;
- la figure 1C illustre les opérations par lesquelles passe l'objet et la façon dont il est manutentionné de son entrée dans le système jusqu'à sa palettisation ;
- la figure 2A représente des étapes d'un procédé de manipulation d'objets à palettiser selon l'invention, pouvant être mis en œuvre par le système de la figure 1A ;
- la figure 2B représente un plan de chargement calculé et utilisé au cours des étapes de la figure 2A ; et
- la figure 2C représente les échanges de données entre des éléments de la figure 1A.

### Description d'un mode de réalisation

### Système

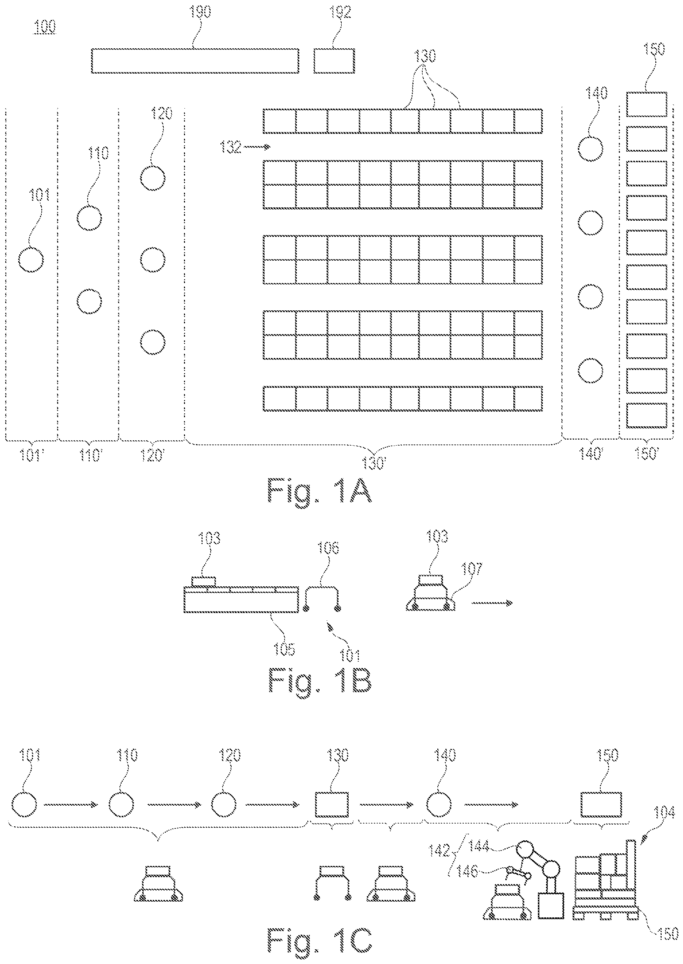

Un agencement possible d'un système de manutention d'objets apte à la mise en œuvre d'un procédé de palettisation des objets selon l'invention est illustré par les figures 1A à 1C.

Le système est basé sur l'utilisation de chariots 106, comme des chariots-gigognes, pour manutentionner de manière automatique, le long d'un parcours de traitement, des objets 103 chargés sur les chariots 106 qui sont déplacés par des robots-navettes 107 contrôlés à distance par un système de contrôle/commande 190.

Les robots-navettes peuvent par exemple être des véhicules électriques munis d'une batterie et d'un système de fixation aux chariots, et être commandés par le système de contrôle/commande par communication sans fil.

Le système de manutention comprend au moins un point d'alimentation 101 des objets dans une zone 101' d'alimentation, des dispositifs 110 d'identification des objets dans une zone 110' d'identification, des dispositifs 120 de détermination des morphologies des objets dans une zone 120' de détermination des morphologies, des points d'accueil de chariots 130 dans une zone de stockage tampon 130' des objets, des stations 140 de palettisation des objets dans une zone de palettisation 140', et des palettes 150 vides ou en cours de chargements dans une zone 150' d'attente des palettes.

Les zones 101', 110', 120', 130', 140' et 150' peuvent être placées dans cet ordre les unes par rapport aux autres, de manière à fluidifier le parcours d'un objet à palettiser 103 sur un chariot 106 qui, arrivant au point d'alimentation 101, sera présenté à l'un des dispositifs 110 de d'identification et à l'un des dispositifs 120 de détermination des morphologies, puis qui sera stocké à un point d'accueil 130 de la zone de stockage tampon 130' avant d'être amené à l'une des stations de palettisation 140 et rangé sur l'une des palettes 150.

La station de palettisation est considérée comme distante du point d'alimentation, ce qui signifie qu'un système de convoyage des objets est nécessaire pour déplacer les objets du point d'alimentation jusqu'à la station de palettisation pour franchir une distance, une ouverture dans une cloison ou un mur, ou encore pour faire passer les objets par des dispositifs de traitement des objets tels que détaillés par la suite avant de mener ces objets à la station de palettisation.

Dans une implémentation particulière, illustrée par la figure 1B, le point d'alimentation 101 est une sortie d'un convoyeur 105 sur lequel, par exemple, des colis 103 arrivant par camions ont été déposés par des opérateurs humains, de sorte que les colis, qui constituent dans ce cas de figure les objets à palettiser, arrivent au point d'alimentation séquentiellement.

Alternativement, le point d'alimentation 101 pourrait être, par exemple, un quai de déchargement de camions et/ou une station de dépalettisation.

Le point d'alimentation 101 n'est pas nécessairement unique dans le système de palettisation, ce dernier pouvant comprendre N point d'alimentation 101, P dispositifs 110 d'identification des objets, Q dispositif 120 de détermination des morphologies des objets et R stations 140 de palettisation, N, P, Q et R étant des nombres entiers naturels, et, par exemple, chaque porte d'un quai de déchargement de camions d'un bâtiment logistique pouvant constituer un point d'alimentation 101 distinct.

Les dispositifs 110 d'identification des objets peuvent comprendre, par exemple, des systèmes de lecture optique associés ou non à des systèmes de traitement informatique des images comme des outils de reconnaissance de caractères et/d'adresses, ou des systèmes de lectures d'étiquettes RFID (Radio Frequency Identification).

Les dispositifs 120 de détermination des morphologies des objets peuvent comprendre, par exemple, des systèmes de mesure par voie optique selon des méthodes connues qui peuvent comprendre l'acquisition d'images par illumination par lumière blanche ou par rayons laser, détection par capteur optique à une ou deux dimensions, et/ou l'analyse d'une ou plusieurs images pour chaque objet par calcul informatique.

Les dispositifs 120 de détermination des morphologies peuvent également comprendre des systèmes de pesée des objets.

Les dispositifs 110 d'identification et les dispositifs 120 de détermination des morphologies peuvent être considérés comme deux sous-dispositifs d'un même dispositif.

Les points d'accueil 130 de chariots de la zone de stockage tampon 130' peuvent être de simples emplacements au sol, munis ou non de marquages et/ou d'accessoires de maintien ou autre des chariots et/ou des robots-navettes.

Les stations de palettisation 140 peuvent comprendre chacune un système manuel de chargement par un opérateur humain transmettant à l'opérateur des instructions du système de contrôle/commande, mais comprend de préférence un système de chargement automatisé 142 contrôlé par le système de contrôle/commande et pouvant comprendre, par exemple, un bras robotisé 144 et son préhenseur 146, illustrés en figure 1C.

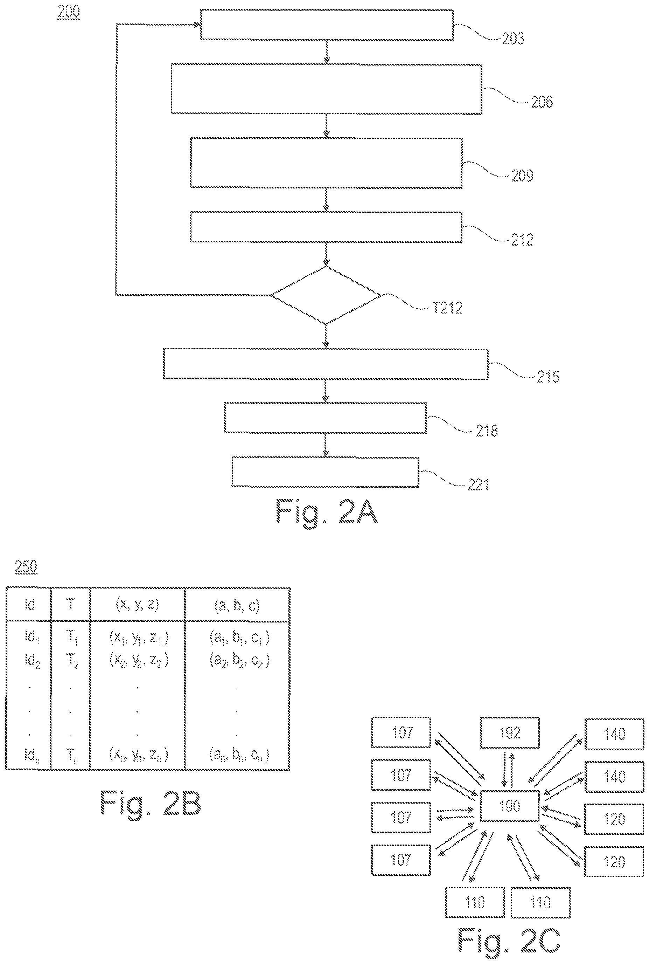

Le système de contrôle/commande 190 comprend un dispositif de traitement d'information tel un processeur, un dispositif de stockage d'informations comme une mémoire informatique, et des moyens de communication filaires ou sans fil avec les autres éléments du système, c'est-à-dire les dispositifs d'identification 110, les dispositifs de détermination des morphologies 120, les stations de palettisation 140, les robots-navettes 107, et une base de données 192 dans laquelle sont stockées des informations concernant les objets à palettiser comme leurs identités et des attributs de tri associés, leurs morphologies et/ou leurs poids, ainsi que leurs niveaux de progression dans la système et les chariots sur lesquels ils sont chargés ; les liaisons fonctionnelles permettant des échanges de données bidirectionnels entre le système de contrôle/commande 192 et les éléments du système mentionnés ci-dessus sont illustrées par la figure 2C.

Le système de contrôle/commande 190 est en particulier configuré pour piloter les robots-navettes et alimenter et rafraîchir la base de données 192 avec les données acquises par les dispositifs d'identification et les dispositifs de détermination de morphologie.

Pour un point d'entrée, le nombre de dispositifs d'identification, le nombre de dispositifs de détermination des morphologies et/ou le nombre de stations de palettisation peuvent être ajustés en fonction de leurs capacités de traitement respectives et du débit en objets attendu du système de palettisation.

### Opérations

Le procédé 200 de palettisation d'objets à palettiser en lots selon l'invention comprend une étape d'identification et de détermination des morphologies des objets précédant une étape de palettisation.

Au cours d'une étape 203, des objets faisant partie d'un flux d'objet 103 à palettiser, et arrivant séquentiellement au point d'alimentation 101 du système d'implémentation du procédé de palettisation, sont chargés sur les chariots 106 présentés au point d'alimentation 101, un objet par chariot.

Les objets peuvent faire partie d'un même lot d'objets à palettiser, ou bien faire partie de différents lots et donc être à palettiser sur différentes palettes.

Les chariots sont amenés par les robots-navettes 107 au point d'alimentation, sur commande de l'unité de contrôle/commande, où les chariots sont chargés manuellement par un opérateur humain ou au moyen d'un dispositif automatisé, par exemple par un bras robot muni d'un préhenseur.

Au cours d'une étape 206, les objets 103 chargés sur les chariots 106 sont déplacés par les robots-navettes 107 et présentés chacun à l'un des dispositifs 110 d'identification des objets qui reconnait des attributs de chaque objet, comme des données d'identification qui peuvent être utilisées par l'unité de contrôle/commande pour l'affectation des objets à un lot d'objets à palettiser, éventuellement en combinaison avec des données de tri stockées à l'avance dans la base de données 192.

De cette manière, un lot d'appartenance de chacun des objets peut être déterminé, par exemple selon leurs destinations et/ou leurs utilisations ultérieures.

Les dispositifs d'identification peuvent en particulier être capables de reconnaître des marques d'identification par voie optique portées par les objets comme des codes barres, des numéros, des adresses d'origines et/de destination, des codes de contenu, ou toute autre information visuelle utile à l'identification et/ou au tri des objets et pouvant être lue au moyen d'un scanner laser, d'une caméra ou tout autre dispositif d'identification optique connu intégré dans les dispositifs d'identification.

Les données d'identification des objets peuvent également être stockées, par exemple, dans une mémoire informatique d'une puce RFID et lues par les dispositifs d'identification selon des méthodes connues.

Les données d'identification peuvent permettre à l'unité de contrôle/commande de faire correspondre des données préenregistrées dans la base de données à chacun des objets passés par le dispositif d'identification.

Les données d'identification des objets ou les données préenregistrées dans la base de données peuvent indiquer une ou plusieurs caractéristiques des objets telles que leur poids, une adresse de destination ou de stockage, un numéro de lot auquel est destiné l'objet, un type ou toute autre catégorie définie, par exemple, par un fournisseur, un destinataire, un fabricant ou un transporteur.

Au cours d'une étape 209, les objets sur chariot passés par les dispositifs d'identification sont déplacés puis présentés chacun à l'un des dispositifs de détermination des morphologies des objets afin de déterminer la morphologie, c'est-à-dire la forme extérieure, et les dimensions physiques des objets, et éventuellement leurs poids ou leurs rigidités.

Au cours de l'étape 209, les morphologies, les dimensions et éventuellement les poids des objets peuvent être stockés et associés aux objets correspondants dans la base de données 192.

Les étapes 206 et 209 constituent collectivement une étape d'acquisition des données d'identification et de morphologie des objets.

En particulier, suite à l'étape d'identification et de détermination des morphologies, l'unité de contrôle/commande identifie ou constitue un lot d'appartenance de chacun des objets identifiés.

Les lots d'appartenance des objets peuvent être définis à l'avance à partir d'une connaissance, par exemple, des identités des colis et de leurs adresses d'expédition respectives.

Alternativement, les lots d'appartenance peuvent être constitués au fur et à mesure de l'arrivée des objets, à partir de règles définies par avance et basées, par exemple, sur les dimensions et les capacités des palettes, les adresses de destination, les dimensions et/ou les poids des objets.

Au cours d'une étape 212, les objets sur chariot, identifiés et de morphologies déterminées après présentation aux dispositifs d'identification et de détermination des morphologies, sont placés à des points d'accueil de chariots de la zone de stockage tampon, puis les robot-navettes se détèlent de leurs chariots respectifs pour se mettre en attente d'une nouvelle tâche ou pour prendre en charge, par exemple, des chariots vides à présenter au point d'alimentation.

Les objets sur chariot peuvent être disposés dans la zone de stockage tampon sans localisation particulière ou, alternativement, être chacun amenés à un emplacement de la zone de stockage qui est fonction des données d'identification des objets, par exemple de manière à rassembler des objets d'un même lot dans une même partie de la zone de stockage tampon.

En particulier, l'unité de contrôle/commande peut piloter les robots-navettes de manière à disposer les chariots à des points d'accueil 130 de la zone de stockage de part et d'autre d'allées de circulation 132 des robots-navettes au bout desquelles sont situées les stations de palettisation 140.

On peut utiliser comme chariots des chariots gigognes, plusieurs de ces chariots pouvant s'imbriquer tout en étant chargés chacun d'un objet, de manière à minimiser la surface au sol occupée dans la zone de stockage tampon.

Au cours d'une étape de test T212, l'unité de contrôle/commande détermine, à partir des données d'identification et de morphologie des objets, si tous les objets constituant un lot complet d'objets à ranger sur une palette ont été présentés aux dispositifs d'identification et de détermination des morphologies.

Il est à noter que l'étape de test T212 peut être opérée avant transfert des objets dans la zone de stockage tampon.

Dans une implémentation particulière du procédé, la détermination peut être opérée en vérifiant si tous les objets constituant un lot d'objets à palettiser sur une même palette sont rassemblés dans la zone de stockage tampon, par exemple en rafraîchissant une liste des objets présents dans la zone de stockage tampon et en comparant cette liste avec des listes des objets constituant les lots à palettiser.

Lorsque l'unité de contrôle/commande détermine que tous les objets constituant un lot donné ont été présentés aux dispositifs d'identification et de détermination des morphologies, et donc que les formes, dimensions et/ou poids de tous les objets constituant le lot donné ont été caractérisés, l'unité de contrôle/commande calcule, au cours d'une étape 215, un plan de chargement 250 optimum pour le lot complet en fonction des informations de morphologie de chacun des objets constituant ledit lot complet, et éventuellement de leurs poids.

Puisque le plan de chargement est établi en prenant en compte les caractéristiques de la totalité des objets constituant un lot avant initiation du chargement, la palettisation peut être optimisée avant le début du rangement et donc ne pas nécessiter de reprise pour corriger un défaut dû à un manque de connaissance sur les objets à ranger.

Le plan de chargement 250 est un ensemble de données stockées dans la base de données 192 et gérées par le système de contrôle/commande 190, pouvant être représenté par le tableau de la figure 2B dans lequel chaque objet d'un lot complet de n objets est identifié par un identifiant Idi, i variant de 1 à n et indiquant l'un des n objets.

Le plan de rangement indique en particulier une séquence temporelle T indiquant l'ordre de chargement Tᵢ de chaque objet Idi sur la palette pour obtenir une répartition spatiale optimale des objets du lot complet sur la palette.

Le plan de rangement peut aussi indiquer des données de position (xᵢ, yᵢ, zᵢ) et d'orientation angulaire (ai, bi, ci) de chacun de ces objets sur la palette, données pouvant être utilisées à leur rangement au niveau de la station de palettisation.

Quel que soit le résultat de l'étape de test T212, les étapes 203, 206, 209 et 212 peuvent continuer à être mises en œuvre sans interruption tant que des objets arrivent au point d'alimentation, par exemple pour traiter en parallèle des objets formant d'autres lots à palettiser.

Au cours d'une étape 218, venant à la suite du calcul du plan de chargement 250 de l'étape 215, les chariots portant les objets constituant un lot complet sont déplacés par les robots-navettes pour être amenés de la zone de stockage tampon 130' à une station de palettisation 140 où les objets sont palettisés selon un plan de chargement correspondant au cours d'une étape 221.

Pour ce faire, l'unité de contrôle/commande initie les opérations de chargement de la palette du lot complet en pilotant des robots-navettes disponibles pour qu'ils s'attellent aux chariots de la zone de stockage tampon qui sont chargés d'objets appartenant au lot complet et les amènent à une station de palettisation dans l'ordre indiqué par le plan de chargement.

Dans une implémentation particulière du procédé, les objets d'un même lot sont amenés et stockés le long d'une même allée de circulation de la zone de stockage tampon, puis palettisés par une station de palettisation située au bout de ladite allée de circulation, ce qui a pour avantage de minimiser le chemin à faire parcourir aux objets de leurs emplacements respectifs de la zone de stockage tampon à la station de palettisation où ils seront palettisés, et donc d'accélérer les opérations de chargement et/ou d'améliorer le taux d'utilisation effective des robots-navettes.

Le système de chargement automatisé de la station de palettisation peut être contrôlé par le système de contrôle/commande 190 pour ranger les objets 103 selon le plan de chargement établi individuellement pour chaque lot d'objets 104 à ranger sur une palette 150.

Ainsi, plusieurs stations de palettisation peuvent être alimentées en parallèle de manière à charger simultanément plusieurs palettes avec des objets à palettiser provenant d'un même point d'alimentation.

Il est à noter qu'en procédant comme décrit plus haut, des palettes en nombre arbitraire peuvent être chargées en parallèle sans infrastructure fixe dimensionnée pour une capacité maximale du dispositif, ce qui amène à des économies d'investissement dans l'infrastructure et une flexibilité accrue des opérations de chargement.

De plus, les objets sont rangés par lots sur chaque palette selon des plans de rangement prenant en compte les morphologies de la totalité des objets formant les lots et établis avant l'initiation des opérations de palettisation de chaque lot, ce qui permet une optimisation extrêmement efficace du rangement, en particulier pour des lots d'objets hétérogènes, c'est-à-dire constitués d'objets morphologiquement différents les uns des autres.

## Revendications

1. Procédé pour palettiser des objets en lots sur palettes, comprenant une étape d'acquisition de données d'identification et de morphologie des objets à palettiser pour optimiser le rangement des objets sur une palette, dans lequel des chariots (106) portant les objets (103) à palettiser sont déplacés par des robots-navettes (107) d'un point d'alimentation (101) en objets, où les objets sont chargés sur les chariots à raison d'un objet par chariot, à une zone de stockage tampon (130') puis à des stations de palettisation (140), sous contrôle d'une unité de contrôle/commande (190) ; le procédé étant **caractérisé en ce que** :
- à la suite du chargement des objets sur les chariots au point d'alimentation, l'étape d'acquisition des données d'identification et de morphologie des objets est réalisée au moyen de dispositifs (110) d'identification et de dispositifs (120) de détermination des morphologies des objets, puis les chariots portant les objets sont déposés dans la zone de stockage tampon par les robots-navettes ;
- à partir des données d'identification et de morphologie des objets, l'unité de contrôle/commande détermine qu'un lot complet d'objets à palettiser peut être constitué sur une palette et, lorsque l'unité de contrôle/commande détermine que tous les objets constituant le lot complet ont été présentés aux dispositifs d'identification et de détermination des morphologies, l'unité de contrôle/commande calcule un plan de chargement de ces objets sur la palette, le plan étant indicatif d'une séquence temporelle selon laquelle ces objets doivent être rangés sur la palette pour obtenir une répartition spatiale optimale des objets sur la palette tenant compte des morphologies de chacun des objets constituant ledit lot complet ; et
- en réponse à la détermination et du calcul du plan de chargement, l'unité de contrôle/commande initie le chargement du lot complet en pilotant les robots-navettes de manière à récupérer les chariots portant les objets constituant le lot complet dans la zone de stockage tampon de manière à présenter les chariots en séquence à une station de palettisation dans l'ordre de la séquence temporelle des objets.

2. Le procédé de palettisation selon la revendication 1, **caractérisé en ce qu'on** utilise des chariots gigognes pour manutentionner les objets.

3. Le procédé de palettisation selon la revendication 1 ou 2, **caractérisé en ce que** les chariots sont stockés dans la zone de stockage tampon de part et d'autre d'allées de circulation (132) des robots-navettes au bout desquelles sont situées les stations de palettisation (140) .

4. Le procédé de palettisation selon la revendication 3, **caractérisé en ce que** les objets d'un même lot sont stockés sur chariot à raison d'un objet par chariot le long d'une même allée de circulation des robots-navettes.

5. Le procédé de palettisation selon la revendication 1, **caractérisé en ce que** deux stations de palettisation sont alimentées en parallèle en objets à palettiser provenant dudit point d'alimentation.

## Patentansprüche

1. Verfahren zum Palettieren von ungebündelten Gegenständen auf Paletten, umfassend einen Schritt der Eingabe von Identifikations- und Morphologiedaten der zu palettierenden Gegenstände, um das Anordnen der Gegenstände auf einer Palette zu optimieren, bei dem Schlitten (106), die die zu palettierenden Gegenstände (103) tragen, von Pendelrobotern (107) von einem Zuführungspunkt (101) von Gegenständen, an dem die Gegenstände auf die Schlitten, insbesondere ein Gegenstand pro Schlitten, geladen werden, zu einer Pufferspeicherzone (130'), dann zu Palettierstationen (140) unter der Kontrolle einer Kontroll-/Steuereinheit (190) verlagert werden; wobei das Verfahren **dadurch gekennzeichnet ist, dass**:
- nach dem Laden der Gegenstände auf die Schlitten am Zuführungspunkt der Schritt der Eingabe der Identifikations- und Morphologiedaten der Gegenstände mit Hilfe von Identifikationsvorrichtungen (110) und Vorrichtungen (120) zur Bestimmung der Morphologien der Gegenstände erfolgt, und dann die Schlitten, die die Gegenstände tragen, in der Pufferspeicherzone durch die Pendelroboter abgelegt werden;
- auf Basis der Identifikations- und Morphologiedaten der Gegenstände die Kontroll-/Steuereinheit bestimmt, dass eine vollständige Charge von zu palettierenden Gegenständen auf einer Palette gebildet sein kann, und, wenn die Kontroll-/Steuereinheit bestimmt, dass alle Gegenstände, die die vollständige Charge bilden, den Identifikationsvorrichtungen und Vorrichtungen zur Bestimmung der Morphologien vorgelegt wurden, die Kontroll-/Steuereinheit einen Ladeplan dieser Gegenstände auf der Palette berechnet, wobei der Plan auf eine zeitliche Abfolge hinweist, gemäß der die Gegenstände auf der Platte angeordnet werden müssen, um eine optimale räumliche Verteilung der Gegenstände auf der Platte unter Berücksichtigung der Morphologien jedes der Gegenstände, der die vollständige Charge bildet, zu erhalten; und
- als Antwort auf die Bestimmung und Berechnung des Ladeplans die Kontroll-/Steuereinheit das Laden der vollständigen Charge initiiert, wobei die Pendelroboter derart gesteuert werden, dass die Schlitten, die die Gegenstände tragen, die die vollständige Charge bilden, in der Pufferspeicherzone abgeholt werden, um die Schlitten nacheinander in der Reihenfolge der zeitlichen Abfolge der Gegenstände zu einer Palettierstation zu bringen.

2. Palettierverfahren nach Anspruch 1, **dadurch gekennzeichnet, dass** Ausziehschlitten verwendet werden, um die Gegenstände zu befördern.

3. Palettierverfahren nach Anspruch 1 oder 2, **dadurch gekennzeichnet, dass** die Schlitten in der Pufferspeicherzone beiderseits von Fahrwegen (132) der Pendelroboter, an deren Enden die Palettierstationen (140) angeordnet sind, gelagert werden.

4. Palettierverfahren nach Anspruch 3, **dadurch gekennzeichnet, dass** die Gegenstände einer selben Charge auf einem Schlitten im Umfang von einem Gegenstand pro Schlitten entlang eines selben Fahrweges der Pendelroboter gelagert sind.

5. Palettierverfahren nach Anspruch 1, **dadurch gekennzeichnet, dass** zwei Palettierstationen parallel mit zu palettierenden Gegenständen versorgt werden, die vom Zuführungspunkt kommen.

## Claims

1. A palletizing method for palletizing objects into batches on pallets, which method comprises a step of acquiring identification and morphology data identifying and indicating the morphologies of the objects to be palletized so as to optimize the stowage of the objects on a pallet, in which trolleys (106) carrying the objects (103) to be palletized are moved by shuttle robots (107) from a feed point (101) at which objects are fed in and at which the objects are loaded onto the trolleys, one object per trolley, to a buffer storage zone (130'), and then to palletizing stations (140), under the control of a monitoring and control unit (190); said method being **characterized in that** :
- after the objects have been loaded onto the trolleys at the feed point, the step of acquiring the identification and morphology data identifying and indicating the morphologies of the objects is performed by means of identification devices (110) and morphology-determining devices (120) for determining morphologies of the objects, and then the trolleys carrying the objects are deposited in the buffer storage zone by the shuttle robots;
- on the basis of the identification and morphology data identifying and indicating the morphologies of the objects, the monitoring and control unit determines when a complete batch of objects to be palletized can be formed on a pallet, and, when the monitoring and control unit determines that all of the objects forming the complete batch have been presented to the identification and morphology-determining devices, the monitoring and control unit computes a loading plan for loading said objects on the pallet, the plan being indicative of a time sequence in which the objects should be stowed on the pallet in order to obtain good distribution in three-dimensional space of the objects on the pallet as a function of the morphologies about each of the objects forming said complete batch; and
- in response to determining and computing the loading plan, the monitoring and control unit initiates loading of the complete batch by controlling the shuttle robots in such a manner as to retrieve the trolleys carrying the objects forming the complete batch from the buffer storage zone in such a manner as to present the trolleys in sequence to a palletizing station in the order of the time sequence for the objects.

2. The palletizing method according to claim 1, **characterized in that** nesting trolleys are used for handling the objects.

3. The palletizing method according to claim 1 or claim 2, **characterized in that** the trolleys are stored in the buffer storage zone on either side of travel aisles (132) along which the shuttle robots can travel and at the ends of which the palletizing stations (140) are situated.

4. The palletizing method according to claim 3, **characterized in that** the objects of the same batch are stored on trolleys one object per trolley along the same travel aisle along which the shuttle robots can travel.

5. The palletizing method according to claim 1, **characterized in that** two palletizing stations are fed in parallel with objects to be palletized coming from said feed point.
